# EUROPÄISCHE PATENTANMELDUNG

(11) **EP 2 827 289 A1**
(43) Veröffentlichungstag der Anmeldung: **21.01.2015**
(21) Anmeldenummer: 14177211.1
(22) Anmeldetag: 16.07.2014
(51) Int. Cl.: G06Q 10/08

(54) **Verfahren zur Abholung und Auslieferung von Sachgütern oder der Erbringung von Dienstleistungen mittels dynamischer Routenplanung und Umverteilung von Gütern**

(30) Priorität: 17.07.2013 DE 102013107616
(71) Anmelder: General Transports GmbH, 39319 Stadt Jerichow Stadtteil Seedorf (DE)
(72) Erfinder: Hartwig, Dr. rer. nat. habil. Andreas, 01445 Radebeul (DE); Gröger, René, 39319 Stadt Jerichow Stadtteil Seedorf (DE)
(74) Vertreter: Sperling, Thomas

(57) **Zusammenfassung**

Die Erfindung betrifft ein Verfahren zur Abholung und Auslieferung von Sachgütern oder der Erbringung von Dienstleistungen mittels dynamischer Routenplanung, bei dem
- mehrere Fahrzeuge mit Lagerkapazität auf berechneten Routen in einem dezentralen Transportnetz Sachgüter oder Dienstleistungen ausliefern, wobei
- die Routen dezentral für die Fahrzeuge berechnet werden und dass
- neue geänderte Routen mit Übergabepunkten und Übergabezeiten für Sachgüter oder Dienstleistungen zwischen Fahrzeugen dezentral berechnet und abgefahren werden, wenn während des Abfahrens der Routen
- neue Aufträge angenommen und/oder
- ein Austausch oder eine Übergabe von Sachgütern oder Dienstleistungen zwischen Fahrzeugen stattfindet und/oder

- eine Änderung von bestehenden Aufträgen erfolgt sowie ein Fahrzeug zur Durchführung des Verfahrens.

## Beschreibung

Die Erfindung betrifft ein Verfahren zur Abholung und Auslieferung von Sachgütern oder der Erbringung von Dienstleistungen mittels dynamischer Routenplanung und Fahrzeuge zur Durchführung des Verfahrens.

Besonders geeignet ist das Verfahren für Auslieferungsdienste zum Transportieren und Verteilen von Sachgütern, wie Paketen, aber auch der Erbringung von Dienstleistungen, welches vorwiegend in Städten und Ballungsgebieten aber auch großflächig eingesetzt werden kann. Mit dem Verfahren ist eine Umverteilung von Gütern mit dem Ziel der Optimierung von Transportaufgaben und Lagerprozessen realisierbar.

Das Anwendungsgebiet der Erfindung liegt somit ganz allgemein bei Auslieferungsdiensten oder beim Umverteilen von Gütern des Einzelhandels zwischen Filialen oder ähnlichen Einsatzgebieten. Der mobile Geldtransport, der Ableseservice sowie Abhol- und Bringedienste für diverse Güter oder Informationen sind weitere Möglichkeiten der Anwendung des erfindungsgemäßen Verfahrens für die Erbringung von Dienstleistungen. Eine Anwendung betrifft beispielsweise die Aufnahme von vom Kunden ausgesuchten Artikeln, wie Weihnachtsbäumen, und deren Auslieferung an vom Kunden bestimmte Adressen.

Ein Element der Erfindung betrifft die Begegnungsplanung von Fahrzeugen und beinhaltet folglich den Begegnungsverkehr. Im Fachgebiet der Transportlogistik steht der Begriff des Begegnungsverkehrs für eine vor allem im nationalen Güterverkehr angewendete Praxis, bei der eine Spedition einen Treffpunkt in der Mitte zweier räumlich gegenläufiger Touren abstimmt, um dort Ladung zwischen den beiden Fahrzeugen auszutauschen. Die Fahrzeuge bringen daraufhin die zweite Hälfte der Tour des anderen Fahrzeuges zu Ende. Als Treffpunkte kommen beispielsweise Park- und Rastplätze entlang von Fernstraßen in Frage. Müssen die Fahrzeuge einen Umweg fahren, um zu dem Treffpunkt zu gelangen oder stehen keine Möglichkeiten zum schnellen Wechseln der Ladung, wie etwa Wechselbrücken oder Ähnliches zur Verfügung, so nimmt der Zeitbedarf entsprechend zu. Der Vorteil dieser Praxis besteht darin, dass die Fahrzeuge schneller zu ihrem Startpunkt zurückkehren und dort wieder zur Verfügung stehen. Die Fahrzeugführer sparen sich somit Wartezeiten fern der Heimat oder längere Leerfahrten.

Bei Anwendungen aus dem Stand der Technik steht in der Regel das Verteilen von Paketen, beziehungsweise allgemein von Sachgütern, im Vordergrund. Es wird überwiegend davon ausgegangen, dass die Sachgüter in örtlich festen Sammelstellen, sogenannten HUBs), gesammelt und sortiert werden. Anschließend werden die Sachgüter auf Auslieferungsfahrzeuge geladen und von diesen verteilt. Folglich liegt ein Schwerpunkt der Lösungsansätze nach dem Stand der Technik auf der Art der Sortierung der Frachtgüter beim Entladen und Beladen des Verteilerfahrzeuges.

Bereits aus der US 4,832,204 geht ein System zum sortierten Beladen von Verteilerfahrzeugen mit Paketen hervor. Ein Zentralrechner sortiert die Pakete in Auslieferungsreihenfolge und erstellt elektronisch lesbare Paket-Etiketten zur Vereinfachung des Beladevorgangs, wobei zum Zusammenstellen einer Beladung einzig der Bestimmungsort maßgeblich ist.

In der DE 44 12 097 C1 wird ein Verfahren zur Verteilung von adressenweise gestreut auszuliefernden Stückgütern offenbart, wobei der Transport der Güter von einem Sammeldepot in die regionalen Verteilerstellen über Container als verladbare Fahrzeug-Aufsätze mit Regalböden durchgeführt wird. In diesen Containern werden die Stückgüter bereits zu Tourensätzen in Auslieferungsreihenfolge zusammengefasst.

Auch in anderen Quellen werden überwiegend die datentechnischen Aspekte der verschiedenen Versionen des Verteilungsverfahrens ausgestaltet. Das Verfahren nach der JP 1999 007 1414 fixiert die Sortierung ebenfalls nur an der Auslieferungsreihenfolge mittels eines Zentralrechners.

Alternativ dazu ist im Stand der Technik nach der EP 1 298 552 A1 bekannt, ein automatisiertes Verfahren zum Sortieren und Verladen von Paketen zu nutzen. Nach der Anlieferung werden die Pakete eingescannt, erhalten ein Label mit Zustelladresse und können in mobilen Regalen zwischengelagert werden, die den Verteilerfahrzeugen zugeordnet sind. Die Sortierung der Pakete nach Auslieferungsreihenfolge erfolgt somit ebenfalls im Zwischenlager.

Darüber hinaus wird in der EP 1 036 602 A2 auch die Verwendung von Barcodes offenbart, sowie das Einholen von Verladeinformationen für einzelne Sendungen und das Verfolgen der Standorte der Fahrzeuge. In diesem Verfahren fixiert ein Zentralrechner die Einsortierung wieder nur an der Auslieferungsreihenfolge.

Schließlich wird in der EP 1 615 730 B1 ein Verfahren und eine Einrichtung zum Verteilen von Paketen oder dergleichen beschrieben, wobei die Pakete in einem Zentrallager gesammelt und mit maschinenlesbaren Informationsträgern, wie Transpondern, versehen werden. Ein Zentralcomputer berechnet die Tourenpläne, nach denen die Transportboxen mit den Paketen in die Verteilfahrzeuge einsortiert und die Lieferungen den Adressaten zugestellt werden.

Insgesamt sind im Stand der Technik prinzipiell unterschiedliche Beladeprinzipien bekannt, nach denen die Transportdienste arbeiten. Es gibt unter anderem den Linienverkehr mit angestrebter maximaler Beladung am Beginn und kompletter Entladung am Ende der Tour. Weitere Möglichkeiten sind die Beladungen last-in-first-out und platzorientierte Beladungen für voll planbare Beladungen mit Be- und Entladung auf der Tour. Im Allgemeinen sind bei diesen Varianten die Tourenpläne bereits vor dem Start der Touren bekannt.

Bei den angegebenen Verfahren aus dem Stand der Technik ist nachteilig, dass ein Sammellager Voraussetzung zur Durchführung der Verfahren ist, in welchem die Güter von den Lieferanten eingehen und die Sendungen für den Warenausgang zusammengestellt werden. Der Aufbau und der Betrieb eines Lagerwesens stellen einen großen Kostenfaktor dar.

Weiterhin werden heutzutage Verteilerrouten derart geplant, dass ein Fahrzeug zum Lager zurück fährt, sobald es das letzte Stückgut beim letzten Adressaten abgeliefert hat. Somit ist die Heimfahrt zumeist auch eine Leerfahrt. Dies bindet jedoch zum einen ungenutzte Transportkapazität und ist zum anderen natürlich auch mit Kosten für Personal und Treibstoff verbunden.

Bei der üblichen zentralen Routenplanung macht es sich oftmals besonders nachteilig bemerkbar, dass diese unflexibel gegenüber kurzfristigen Änderungen ist. Da es heute beispielsweise in der verarbeitenden Industrie immer wichtiger wird, besonders schnell auf Kundenwünsche reagieren zu können, muss auch der Transportunternehmer diesem Wunsch nachkommen. Somit werden auch extrem kurzfristige Aufträge oder Auftragsänderungen immer stärker den Alltag eines Fuhrunternehmens bestimmen. In dieser Situation erweist sich eine zentrale Routenplanung meist als unflexibel und somit als ungeeignet.

Schließlich sind in Transportunternehmen oftmals Verteilerfahrzeuge im Einsatz, die zusätzlich auch noch von unterschiedlicher Bauart sind. Dies macht es für ein zentrales Sortiersystem umso schwieriger, das Fahrzeug optimal zu beladen. Meist obliegt es dann dem Fahrer, durch spontane und individuelle Raumplanung die geeigneten Ablagen für alle Transportgüter zu finden. Dies hat jedoch zur Folge, dass der Fahrer sich beim Entladen an die Positionen jedes einzelnen Gutes erinnern muss, was im ungünstigen Fall zu längerem Suchen führen kann.

Die Aufgabe der Erfindung besteht darin, ein Verfahren zur Lagerung und Auslieferung von Sachgütern oder Dienstleistungen und Fahrzeuge zur Durchführung des Verfahrens zur Verfügung zu stellen, welches eine hochflexible und individuelle Routenplanung unter größtmöglicher Vermeidung von Leerfahrten ermöglicht. Weiterhin soll das Verfahren den einzelnen Fahrer dabei unterstützen, den Laderaum seines Fahrzeuges individuell und optimal auszunutzen. Insgesamt soll eine kostengünstige und aufwandsarme Lösung bereitgestellt werden.

Die Aufgabe wird durch ein Verfahren und ein Fahrzeug mit den Merkmalen der selbstständigen Patentansprüche gelöst. Weiterbildungen sind in den abhängigen Patentansprüchen angegeben.

Die Aufgabe der Erfindung wird insbesondere durch ein Verfahren zur Abholung und Auslieferung von Sachgütern oder der Erbringung von Dienstleistungen mittels dynamischer Routenplanung gelöst, bei dem mehrere Fahrzeuge mit Lagerkapazität auf berechneten Routen in einem dezentralen Transportnetz Sachgüter ausliefern oder Dienstleistungen erbringen. Die Routen werden dezentral für die Fahrzeuge berechnet. In Abhängigkeit bestimmter Informationen und Ereignisse werden neue geänderte Routen mit Übergabepunkten und Übergabezeiten für Sachgüter oder Dienstleistungen zwischen den Fahrzeugen dezentral berechnet und abgefahren. Informationen und Ereignisse für die Berechnung einer neuen Route für ein Fahrzeug sind, wenn während des Abfahrens der Routen neue Aufträge angenommen und/oder ein Austausch oder eine Übergabe von Sachgütern oder Dienstleistungen zwischen Fahrzeugen stattfindet und/oder eine Änderung von bestehenden Aufträgen, beispielsweise durch den Kunden, erfolgt.

Nachfolgend werden zum besseren Verständnis der Erfindung einige Begriffe definiert. Im Sinne der Erfindung werden unter Fahrzeugen mit Lagerkapazität jegliche Fahrzeuge verstanden, welche Sachgüter transportieren oder mit denen Dienstleistungen erbracht werden können. Derartige Fahrzeuge können auch nach ihrer jeweiligen spezialisierten Funktion als Lager- und Verteilfahrzeug oder Zustellfahrzeug bezeichnet werden.

Unter dem Begriff der berechneten Routen sollen die rechentechnisch ermittelten Routen für Touren der Fahrzeuge verstanden werden. Nachfolgend werden der Begriff der Route und der Tour vereinfachend gleichbedeutend verwendet.

Als dezentrales Transportnetz wird in erster Linie ein Straßen- und Wegenetz verstanden, wobei auch Wasserstraßen oder Schienennetze ebenso dezentrale Transportnetze im Sinne der Erfindung sein können. Ein Gesamtnetz setzt sich aus mehreren Einheiten, den dezentralen Netzen zusammen. Diese dezentralen Netze sind beispielsweise Regionen, abgegrenzte Bedienungsgebiete von Speditionsunternehmen, Städte oder Ballungsgebiete.

Die dynamische Routenplanung beziehungsweise dynamische Berechnung von Routen beinhaltet, dass in Abhängigkeit von eintreffenden Informationen oder eintretenden Ereignissen, wie beispielsweise dem Eingang neuer Aufträge, dem erforderlichen Austausch von Gütern mit anderen Fahrzeugen zur Konsolidierung oder der Änderung von bestehenden Aufträgen oder Änderungen von Randbedingungen, eine Neuberechnung der aktuellen Route erfolgt und die aktuelle Route gegebenenfalls auch mehrfach umgeplant wird. Diese Vorgehensweise impliziert, dass die erste, noch vor dem Beginn der Tour berechnete Route lediglich vorläufiger Natur ist, welche auch jederzeit während der Tour durch eine Änderung der Auftragslage oder der Verkehrssituation verändert werden kann.

Bei der Berechnung der Routen für die Fahrzeuge werden die Aufenthaltsorte anderer Fahrzeuge und deren Ladung berücksichtigt und eine neue dynamische Route wird in Abhängigkeit vorgebbarer Zielfaktoren unter Verwendung übermittelter Daten während des Abfahrens der Route ermittelt. Bei einer Begegnungsplanung werden Übergabepunkte und Übergabezeiten für Sachgüter oder Dienstleistungen für mindestens zwei Fahrzeuge ermittelt.

Nach einer vorteilhaften Ausgestaltung der Erfindung werden die Routen dezentral und mobil in den Fahrzeugen berechnet. Damit ist zu verstehen, dass die Software zur dynamischen Routenplanung auf Smartphones, Tablet-PCs, Laptops oder ähnlichen internetfähigen Recheneinheiten Verwendung findet, welche in den Verteilerfahrzeugen mitgeführt werden.

Alternativ dazu besteht eine vorteilhafte Ausgestaltung der Erfindung darin, dass die Routen dezentral stationär innerhalb des dezentralen Transportnetzes berechnet werden. Im Unterschied zur vorangehenden Verfahrensvariante ist hier ein stationärer PC oder eine ähnliche internetfähige Recheneinheit vorgesehen, welche zumindest für ein Teilgebiet der Auslieferungsregion die Routen und Übergabepunkte bestimmt und an die Recheneinheiten in den Verteilerfahrzeugen weiterleitet.

Nach einer weiteren alternativen Ausgestaltung der Erfindung werden nur die Tourdaten dezentral und stationär innerhalb des dezentralen Transportnetzes berechnet und an das Fahrzeug übermittelt, wonach die Routen zwischen den Tourdaten mobil in den Fahrzeugen berechnet werden. Unter dem Begriff der Tourdaten sind die Eckpunkte einer Route zu verstehen, die bereits durch den Kunden festgelegt wurden und nur auf Kundenwunsch verändert werden können, also beispielsweise Auslieferungs- oder Übergabe- beziehungsweise Aufnahmeorte für die Ladung.

Die Tourdaten werden nach einer Ausgestaltung der Erfindung innerhalb des dezentralen Netzes, beispielsweise innerhalb einer Region, zentral stationär berechnet und an die Fahrzeuge übermittelt, in welchen dann die Ermittlung der Routen zwischen den Tourdaten separat erfolgt. Die Auflösung des Gesamtnetzes in verschiedene dezentrale Netze und deren Verknüpfung miteinander reduziert die Belastung der Recheneinheiten erheblich, was sich in der Dimensionierung und den Kosten für diese Recheneinheiten widerspiegelt und den Aufwand für die Berechnung von Routen im Vergleich zu zentralen Netzen reduziert.

Nach einer vorteilhaften Ausgestaltung der Erfindung wird die Berechnung einer neuen Route durch eine Konsolidierung von Sachgütern und Dienstleistungen ausgelöst. Unter einer Konsolidierung von Sendungen versteht man das Zusammenfassen von verschiedenen Sachgütern oder Dienstleistungen für einen Adressaten zu einer Einzelsendung, was zu Einsparungen bei den Frachtkosten führt. Besonders hervorzuheben ist die systemübergreifende Konsolidierung, die mit dem vorgeschlagenen Verfahren möglich wird. Zum einen werden sowohl Sachgüter als auch Dienstleistungen vom Konsolidierungsprozess erfasst und zum anderen ist durch die dynamische Routenplanung die Möglichkeit der Einbeziehung von Sachgütern oder Dienstleistungen anderer Ausliefersysteme gegeben.

Weiterhin wird die Erfindung vorteilhaft dadurch weitergebildet, dass die Berechnung einer neuen Route durch eine zeitliche und örtliche Überwachung der Füllstände des Laderaumes, des Volumens und des Gewichts der Ladung der Fahrzeuge ausgelöst wird. Dabei ist die Füllstandsüberwachung vorzugsweise regelmäßig nach jedem Be- und Entladevorgang durchzuführen und beinhaltet die Identifizierung der ein- und ausgeladenen Waren, die damit verbundene Gesamtbeladung des Fahrzeuges, sowie die Bestimmung der noch zur Verfügung stehenden freien Raum- und Gewichtskapazitäten im Laderaum.

Eine vorteilhafte Ausgestaltung besteht weiterhin darin, dass die Berechnung einer neuen Route erfolgt, wenn dies durch eine Veränderung der Verkehrssituation bedingt ist. Indem die dynamische Routenplanung die aktuellen Verkehrsinformationen aus dem Internet, beispielsweise zu Staus, hohem Verkehrsaufkommen, Sperrungen und Umleitungen, in die Planung einbezieht, ist sie in der Lage, optimierte Routenänderungen vorzuschlagen.

Die Aufgabe wird weiterhin durch ein Fahrzeug zur Durchführung eines Verfahrens gemäß der Erfindung gelöst, in welchem eine Recheneinheit zur Berechnung einer Route im Fahrzeug angeordnet ist und die Berechnung der Route somit mobil im Fahrzeug erfolgen kann.

Besonders vorteilhaft ist die Ausgestaltung einer Austauschvorrichtung für Sachgüter an den Fahrzeugen vorgesehen, damit diese an Übergabepunkten für die Sachgüter oder an Aufnahmepunkten von Sachgütern diese zwischen den Fahrzeugen aufwandsarm austauschen können. Diese Details zum physischen Austausch von Gütern zwischen jeweils zwei Fahrzeugen sind speziell für die dynamische Begegnungslogistik ausgebildet. Zwei Fahrzeuge müssen Tür an Tür Güter austauschen können. Um den Weg zwischen beiden Ladeflächen für schwerere Lasten, wie beispielsweise eine Waschmaschine oder ähnliches, zu überbrücken, können unterschiedliche konstruktive Details, wie Klappen, Schiebebleche auf Rollen und ähnliches, verwendet werden. Weiterhin ist es vorteilhaft, dass zur Warenerfassung in den Fahrzeugen geeignete Mittel, wie eine Datenbrille, ein Scanner, ein Fotoapparat oder eine Filmkamera angeordnet und vorgesehen sind. Unter den Mitteln der Warenerfassung oder kurz Sensorik werden im weitesten Sinne Vorrichtungen verstanden, welche Daten für die dezentrale Rechentechnik erzeugen. Diese Daten werden für die Berechnung der dynamischen Route als Randbedingungen benötigt. In den vorzugsweise dafür eingesetzten Datenbrillen sind Kameras integriert, mit denen das Sichtfeld des Trägers nach visuellen Merkmalen abgescannt wird, mit welchen die Sachgüter identifiziert werden. Insbesondere ist die vollständige Warenerfassung beim Be- und Entladen eine Vorraussetzung für eine Füllstandsanalyse, die zur Bestimmung des Grades der Befüllung beziehungsweise der noch freien Ladekapazität des Fahrzeuges ausgebildet ist.

Nach einer besonders vorteilhaften Ausgestaltung der Erfindung ist ein Ortungs- und Navigationssystem in dem Fahrzeug angeordnet. Mit Hilfe des Global Positioning Systems GPS bestimmt die Recheneinheit im Fahrzeug dessen aktuelle Position und stellt mittels digitaler Straßenkarten sowie Verkehrinformationen aus dem Internet eine Route zu dem Ziel her.

Weiterhin ist bevorzugt als Recheneinheit und/oder als Ortungs- und Navigationssystem ein Smartphone im Fahrzeug angeordnet, welches über ausreichende Rechenkapazität und über Ortungs- und Navigationsfunktionalität verfügt. Alternativ kann die mobile Recheneinheit auch als Tablet-PC, Laptop oder ähnlicher internetfähiger Recheneinheit ausgebildet sein.

Ein Wechselwerbeträger am Fahrzeug ermöglicht in vorteilhafter Weise, dass zusätzlich zu den Transportaufgaben das Fahrzeug auch als Werbeträger dienen kann. Vorzugsweise sind an den Außenseiten der Fahrzeuge, insbesondere an den großen Seitenflächen, Rahmen angeordnet, in welche entsprechende geformte Plakate mit den zu bewerbenden Waren oder Dienstleistungen auswechselweise befestigbar ausgebildet sind.

Das Fahrzeug weist bevorzugt mehrere Türen an den Seitenflächen des Laderaumes auf, wobei der Laderaum durch Verschiebewände segmentierbar ausgebildet ist.

Konzeptionsgemäß ermöglicht die neue Transportlogistik ein deutlich flexibleres Zustellverhalten durch ein System mit hoher innerer Intelligenz. Diese Logistik bündelt individuelle Transporte auf Fahrzeugen im Sinne rollender Lager, die in einem Netz von Touren unterwegs sind. Die Routen für die Touren oder die Tourdaten werden durch Rechentechnik in den Fahrzeugen oder stationär dezentral berechnet und werden beim Hinzukommen von Aufträgen oder einer Änderung der Auftragslage, der Transportsituation oder der Verkehrssituation immer wieder neu angepasst. Die mit der ständigen Anpassung verbundene Dynamik der Routenplanung ermöglicht die konsequente Einbeziehung von Kundenwünschen bezüglich der Auslieferungsorte und Auslieferungszeiten für die Sachgüter und Dienstleistungen. Dieses System wird daher auch im Unterschied zu konventionellen Verfahrensweisen des push-Systems als pull-System bezeichnet, da der Empfänger die Lieferung der Sendungen veranlasst, wenn diese die Waren benötigt.

Erfindungsgemäß tauschen die eingesetzten Fahrzeuge mit Lagerkapazität untereinander zu transportierende Sachgüter oder Dienstleistungen aus, wofür die Fahrzeuge mit speziellem Equipment zum Aufnehmen, Übergeben und Auslagern von Gütern ausgerüstet sind. Die neue Transportlogistik ist kompatibel mit traditionellen Transportsystemen und kann durch die flexible Technik auch traditionell arbeiten. Sie ist dadurch in der Lage, selbst unterschiedliche Transportsysteme zu bündeln, so dass Sendungen aus unterschiedlichen Systemen für ein und denselben Kunden konsolidiert werden.

Eine Besonderheit des Verfahrens besteht darin, dass das Fahrzeug auch nach dem Start einer Tour auf einer vorausberechneten Route von anderen Fahrzeugen noch zusätzliche Transportaufgaben entgegennehmen und ausführen sowie gegebenenfalls Sachgüter oder Dienstleistungen an andere Fahrzeuge abgeben kann. Neben der traditionellen, vorausplanenden Routenoptimierung kommt eine ständige, dynamische Umplanung zum Einsatz. Diese betrifft sowohl die einzelnen Routen durch Einspeisen neuer Aufträge, als auch die Routen untereinander durch Austausch von Gütern.

Gekennzeichnet ist die erfinderische Lösung somit dadurch, dass eine dynamische Begegnungsplanung für die Fahrzeuge einer Flotte zum Einsatz kommt, die sich prinzipiell auch in der Art der verwendeten Rechentechnik und deren Verwendung selbst vom Verfahren und von der Rechentechnik der traditionellen Transportsysteme unterscheidet. Bei dem erfindungsgemäßen Verfahren wird dezentrale Rechentechnik mit einem Zuständigkeitsbereich für eine Anzahl von Touren eingesetzt. Die dezentrale Rechentechnik realisiert die vorausplanende Routenoptimierung und die der Erfindung innewohnende dynamische Routenoptimierung durch Auftragsänderungs- und Begegnungsplanung der Fahrzeuge.

Ein wichtiges Merkmal der Erfindung besteht darin, dass das Verfahren umfassend Informationen über die zeitliche und räumliche Orientierung der Fahrzeuge benachbarter Routen in die Berechnung der Routen implementiert. Die dezentrale Rechentechnik kann fahrzeugseitig mit Smartphones beziehungsweise Rechnerhandys ergänzt werden.

Durch die Verknüpfung von elektronischer Standortbestimmung und Ortung der Fahrzeuge untereinander sowie deren ständiger Abgleich mit der

Routenplanung wird diese Art der dynamischen Begegnungsplanung ermöglicht. Die Verknüpfung bekannter Technikkomponenten führt zu vollkommen neuen Funktionalitäten bei der Begegnungslogistik.

Insbesondere wird mittels Smartphone eine neue Art des Routens ermöglicht, bei der die für eine Begegnung vorgesehenen Fahrzeuge sich in gemeinsamer Absprache für einen Treffpunkt aus einer rechnergenerierten Liste von Vorschlägen entscheiden. Dieses sogenannte doppelte Routen und die dazugehörige Visualisierung sich aufeinander zu bewegender Objekte ist eine besonders vorteilhafte Ausgestaltung der erfindungsgemäßen dynamischen Begegnungslogistik.

Der Konzeption der Erfindung liegen logistische Strategien zugrunde.

Die Aufgabe Pickup-and-Delivery mit Zeitfenstern und Crossdocking ohne feste Lager in einer Region oder Stadt durchzuführen, hängt von deren Größe und den Entfernungen der Sendungen ab. Unter Crossdocking wird die Übergabe von Gütern zwischen Fahrzeugen verstanden, deren Routen sich mindestens an den Übergabepunkten für die Güter begegnen.

Es gibt den Gegensatz einerseits Crossdocking aus Kostengründen möglichst zu vermeiden und andererseits ist Crossdocking bei großen Sendungsentfernungen unvermeidbar ,wenn nicht jede Sendung vereinzelt gefahren werden soll.

Die Hauptziele sind die Transportbündelung zur Kostensenkung und Zeitminimierung und die Interaktionsfähigkeit zur schnellen Reaktion auf Kundenwünsche. Dies beinhaltet, dass ein Kunde durch Konsolidierung von Aufträgen möglichst nur einmal angefahren werden soll.

Unter diesen Voraussetzungen lassen sich unterschiedliche Logistiken über die Art und Weise der Anwendung von Optimierungsverfahren klassifizieren. Es ergeben sich folgende interaktionsfähige Logistikstrategien, aufsteigend von der Vermeidung bis zur Durchsetzung von Crossdocking, wobei jede Optimierungsstrategie einer Logistikstrategie entspricht:

### Short-Logistik

Hierbei werden in das System nur kurzreichweitige Sendungen aufgenommen. Ist die geographische Dichte der Sendungen relativ hoch, erreichen Optimierungsverfahren gute Ergebnisse unter den Premissen der Aufgabenstellung.

### Sorting-Logistik

Ist die Kurzreichweitigkeit nicht immer zu erreichen, werden die Sendungen zunächst ihrer Reichweite nach sortiert. Danach werden den Optimierungsverfahren zuerst die langreichweitigen und absteigend dann die anderen zugeführt unter Berücksichtigung sonstiger Nebenbedingungen. Diese Logistik hat Vorteile bei wenig Fahrzeugen und geringer geographischer Sendungsdichte.

### Long-Short-Rest-Logistik

Wird die Forderung nach langreichweitigen Sendungen erhoben, teilt man die Sendungen in lange, kurze und in die restlichen Touren auf. Dann werden die langen Sendungen zuerst untereinander unter Berücksichtigung sonstiger Nebenbedingungen optimiert, danach die kurzen und der Rest wird auf beide aufgeteilt. Günstig ist dieses Vorgehen bei noch nicht so großen Gebieten.

### Break-Time-Logistik

Wenn das zu bedienende Gebiet größer wird, ist Crossdocking unvermeidbar, um die Kosten durch Sendungsbündelung noch zu beherrschen. Grundgedanke ist es, zunächst die Fahrzeuge zum Einsammeln in begrenzte, dynamisch berechnete Gebiete zu schicken, danach in einem gemeinsamen Zeitintervall (Break-Time) Sendungsgegenstände untereinander auszutauschen und dann die Gegenstände in begrenzten, dynamisch berechneten Gebieten auszuliefern.

Der Austausch kann unterschiedlich organisiert werden, zum Beispiel an einem zentralen Ort mit allen Fahrzeugen, beziehungsweise bei größeren Gebieten zentral mit jeweils 3 bis 5 Fahrzeugen, um den Austausch nicht zu überlasten, bielateral an dynamisch berechneten Orten oder durch Einsatz von Austauschfahrzeugen, die in der Nähe der letzen Pickups der anderen Fahrzeuge die auszutauschenden Gegenstände aufnehmen beziehungsweise wieder abgeben.

Alle diese Strategien lassen sich kombinieren und können auch in Teilgebieten verwendet werden, die zusammen ein relativ großes Gebiet abdecken.

Weitere Aspekte der Erfindung und deren Ausgestaltungen werden im Folgenden beschrieben.

Für die Realisierung der Begegnungsplanung ist von besonderem Vorteil, wenn sich die betroffenen Fahrzeuge zum Zwecke des Austauschens von Gütern entweder an beliebigen Stellen treffen, wo mindestens zwei Fahrzeuge halten dürfen, oder an bevorzugten Stellen, wie öffentliche Parkplätze, Tankstellen und ähnlichem, die nicht eigens für ein Treffen hergerichtet werden müssen.

Die Gesamtheit der Lagerkapazität der Fahrzeuge einer Flotte dient der physischen Speicherung der Sachgüter zwischen der Abholung und Aufnahme und der Auslieferung der Sachgüter und stellt somit auch ein mobiles oder rollendes Lager dar. Durch die Einführung von Einheitsbehältern und Regalen, die mit Labeln versehen werden können, Kleiderstangen, Kleiderhaken und dergleichen kann die Ordnung im Fahrzeug erleichtert werden. Die Platzverteilung in den Fahrzeugen erfolgt über ein Lagerverwaltungssystem, welches auf der dezentralen Rechentechnik gespeichert ist.

Das beschriebene Verfahren führt zu weiteren Verbesserungen gegenüber Lösungen aus dem Stand der Technik, indem das Ein- und Auslagern mit der Unterstützung elektronischer Geräte wie Scanner, Kamera und insbesondere mit Datenbrille zur Bilderfassung und Bilderkennung erfolgt. Dies geschieht einerseits, um die Güter im Lagerverwaltungssystem zu registrieren und andererseits, um den Lagerort im Fahrzeug selbst festzuhalten. Dabei ist es möglich, dass die Rechentechnik diese Lagerorte vorschlagen kann oder, falls dies nicht nötig ist, der Fahrer den Ort selbst aussuchen kann. Die Bilderfassung dient sowohl der elektronischen Kommissionierung und Dokumentation als auch der visuellen Darstellung des Lagerortes zum schnellen Wiederfinden bei der Auslieferung.

Damit nicht alle Informationen sofort ausgetauscht werden müssen, ist die Rechentechnik mit einer Füllstandmessung des Laderaums ausgerüstet. Das Verfahren wird dadurch realisiert, dass beispielsweise ein Verfahren zur Füllstandmessung zum Einsatz kommen kann, bei dem im Fahrzeug eine Kamera angebracht ist, deren Aufzeichnungen durch die Rechentechnik ausgewertet werden.

In vielen Fällen muss eine Füllstandanalyse, insbesondere beim Einladen erfolgen. Da die zu transportierenden Sachgüter unterschiedlichster Art sein können, etwa vom Brief und Hemd über Fahrräder bis zur Badewanne, wird der Hauptteil der Füllstandanalyse durch elektronisch geführte Kataloge unterstützt. Die Erfindung wird vorteilhaft dadurch erweitert, dass die Kataloge für zahlreiche Güter spezielle Informationen zu Gewicht, Volumen und dergleichen sowie weitere Besonderheiten auflisten. So wird die Beladung der Fahrzeuge rechentechnisch abschätzbar gemacht.

Die in den Katalogen geführten Güter sind neben ihrer alphanumerischen Speicherung auch akustisch hinterlegt, was zu Verbesserungen gegenüber Lösungen aus dem Stand der Technik führt. Damit wird insbesondere auch durch Sprachsteuerung eine schnelle Arbeit bei der Annahme von Transportaufträgen, der Einplanung, der Kommissionierung, der Einlagerung, der Umlagerung, der Auslagerung, der Übergabe und der Dokumentation ermöglicht.

Der neuen Transportlogistik ist innewohnend, dass sie kompatibel mit traditionellen Transportsystemen ist und somit auch traditionell arbeiten kann.

Als vorteilhafte Besonderheit besitzt die neue Transportlogistik durch die hohe innere Intelligenz die Fähigkeit, im stark individuellen Transportgeschäft Transporte zu bündeln. Darüber hinaus kann die flexible technische Ausrüstung auch unterschiedliche Transportdienstleistungen selbst bündeln und in unterschiedlichsten traditionellen Arten eingesetzt werden.

Zum Bündeln von unterschiedlich gearteten Transportdiensten sind die Fahrzeuge nach außen hin mit einer neutralen Werbung versehen, die durch speziell konstruierte Wechselsysteme auch Werbung anderer Dienstleister tragen kann.

Als Beispiel für eine Dienstleistung die mit dem erfindungsgemäßen Verfahren erbracht werden kann ist zunächst allgemein eine Einkaufsdienstleistung zu nennen. Der Kunde liest mit einem Scanner den Code für die gewünschten Produkte, die dann beispielsweise online bestellt und von den Fahrzeugen aufgenommen und ausgeliefert werden.

Ein weiteres Beispiel für die Umverteilung von Gütern besteht in der bedarfsgerechten Umverteilung von Presseartikeln, wie Zeitungen und Zeitschriften oder leichtverderblichen Waren. Mittels online Informationsaustausch über Bedarf und Bestand von bestimmten Produkten an bestimmten Orten wird die Umverteilung dieser Produkte durch die Fahrzeuge realisiert, welche die Produkte an den Orten mit Bestand aufnehmen und zu den Orten mit Bedarf transportieren.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1a:: dezentrales Transportnetz,
- Fig. 1b:: Transport von Sachgütern,
- Fig. 2a:: rollendes Lager mit Konsolidierung und Begegnung,
- Fig. 2b:: Begegnungsplan mit Änderung,
- Fig. 3:: Vorrichtungen zum Austausch und Lagern,
- Fig. 4:: Ausrüstung zur Füllstandanalyse,
- Fig. 5:: Fahrzeugunterschiede,
- Fig. 6:: Lieferwagen mit mehreren seitlichen Türen und
- Fig. 7:: Lieferwagen mit variabel positionierbaren Verschiebewänden.

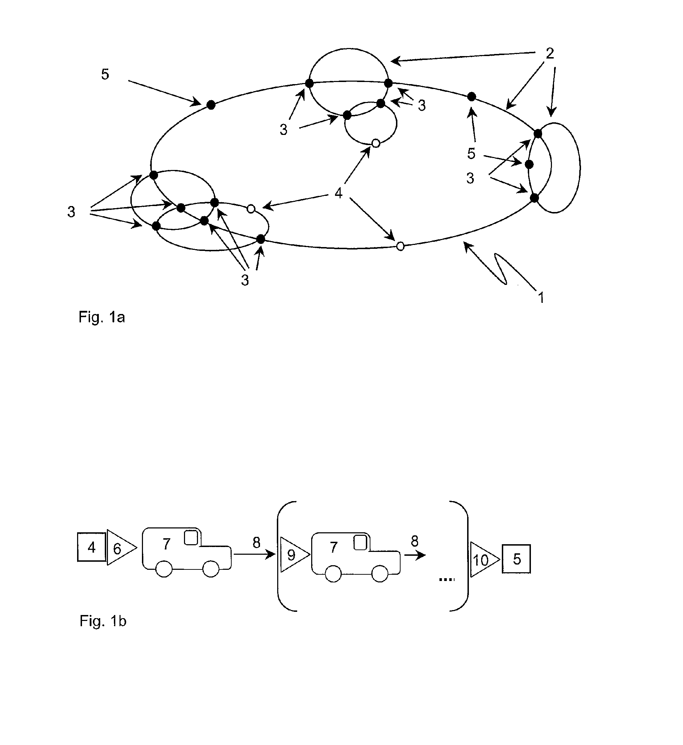

Die Figur 1a stellt ein vereinfachtes dezentrales Transportnetz 1 zwischen Versendern 4 und Empfängern 5 dar, welches auf den systemeigenen Verteilwegen ohne feste Lager auskommt. Die Routen 2 und die Begegnungen 3 der Fahrzeuge werden so berechnet, so dass es möglich ist, die Güter in kürzester Zeit aufzunehmen, auszutauschen und auszuliefern.

Da der Aufbau und Betrieb eines Lagerwesens große Kostenfaktoren darstellen, ergibt sich insbesondere für kleine und mittelständische Speditionsunternehmen nunmehr die Alternative, komplett ohne ein eigenes Lager auszukommen und damit die Fixkosten des Speditionsunternehmens drastisch zu senken.

Figur 1b zeigt schematisch den Weg der Sachgüter vom Versender 4 zum Empfänger 5. Nach der Güteraufnahme 6 in eines der Lager- und Verteilfahrzeuge 7 besteht grundsätzlich die herkömmliche Möglichkeit, die

Sachgüter direkt und unmittelbar zu dem betreffenden Empfänger 5 zu transportieren und dort abzuliefern 10. Die Erfindung ermöglicht es jedoch, bei Bedarf die Sachgüter in ein anderes Lager- und Verteilfahrzeug 7 zu übergeben 9 und den Transport 8 mit diesem fortzuführen. Der Prozess des Güteraustausches 9 in ein anderes Lager- und Verteilfahrzeug 7 kann hierbei beliebig oft wiederholt werden, wobei auch hier gilt so oft wie nötig und so wenig wie möglich aufgrund des Risikos der Beschädigung.

Das Transportverfahren beinhaltet ein dezentrales Transportsystem bei dem der Transport lokal orientiert ist. Es kommt ohne feste Lager und auch ohne spezielle HUBs zum Lagern und Sortieren aus. Stattdessen wird eine Anzahl von Fahrzeugen 7 als rollendes Lager bereitgestellt, in denen die Güter während des Transportprozesses gleichzeitig gelagert werden. Das bedeutet insbesondere, dass das Aufnehmen eines Sachgutes gleichzeitig mit dem Einsortieren in eine Lieferreihenfolge erfolgt.

Bevorzugt wird das Transportverfahren regional, dass heißt in Städten und Ballungsgebieten eingesetzt. Es kann aber auch in ländlichen Gebieten Verwendung finden. Das Konsolidieren von Gütern von unterschiedlichen Versendern 4 für einen Kunden wird in diesem Transportnetz möglich.

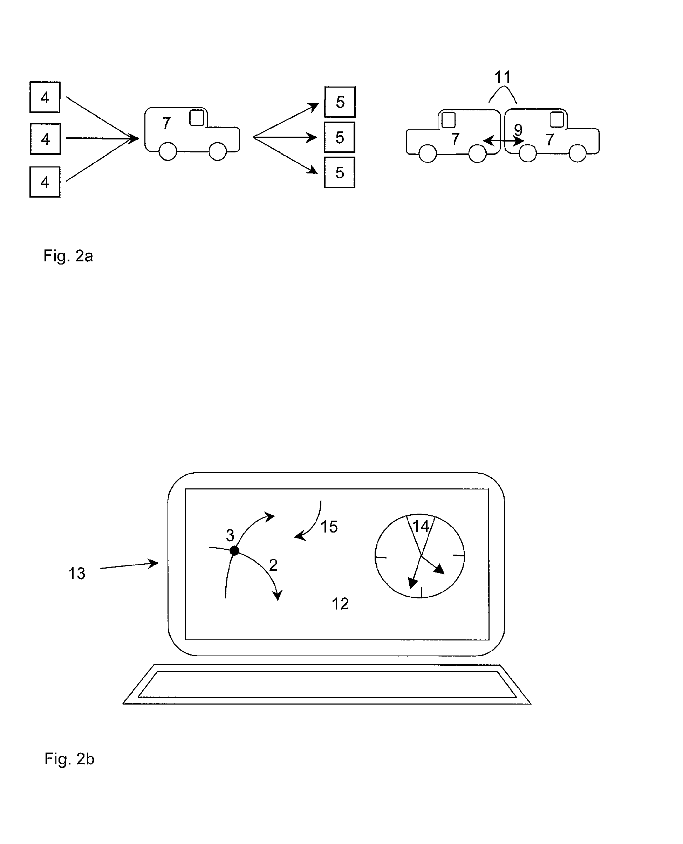

Die Figur 2a stellt das Schema des rollenden Lagers dar, nach dem ein Lager- und Verteilfahrzeug 7 Sachgüter von beliebigen Versendern 4 aufnehmen und an beliebige Empfänger 5 abliefern kann. Daneben besitzen diese Lager- und Verteilfahrzeuge 7 speziell für diese Art des Transportes konstruierte Vorrichtungen zur Aufnahme und Übergabe 9 der Güter, wodurch sie in der Lage sind, im Andockverfahren 11 Güter untereinander auszutauschen. Dadurch wird die Konsolidierung von Sachgütern für einen Kunden auf ein Zustellfahrzeug 7 möglich.

Figur 2b zeigt symbolisch den dynamischen Begegnungsplan 12, mit dessen Hilfe die Routen 2 und die Begegnungen 3 der Fahrzeuge von dezentralen Recheneinheiten 13 berechnet werden, so dass es möglich ist, die Güter in vorgegebenen oder berechneten Zeitfenstern 14 aufzunehmen, auszutauschen und auszuliefern. Die erfindungsgemäße dezentrale Transportlogistik ist derart hochflexibel ausgebildet, dass sie selbst während der bereits laufenden Touren ermöglicht, zusätzliche Aufträge 15 auszuführen.

Des Weiteren sind die Fahrzeuge mit Sensorik, wie Ortungs- und Navigationssystemen sowie Systemen zur Füllstandsmessung, ausgestattet. Die von der Sensorik den dezentralen Recheneinheiten bereitgestellten Informationen werden eingesetzt, um jederzeit der jeweiligen Situation angepasste Routenänderungen vorzunehmen, die den tatsächlichen Transportplan im Sinne der Begegnungsplanung sogar während des Transportes beeinflussen. Die sensorische Auswertung der real gefahrenen Wege geht in die dynamische Datenhaltung ein und hält diese aktuell.

Die elektronisch erfassbaren Aufträge werden vor und während der Durchführung des Transportes angenommen und eingeplant. Die Übernahme der Sachgüter oder Dienstleistungen in das Transportverfahren erfolgt auf einzelne oder mehrere Fahrzeuge.

Das Transportverfahren weist durch die dynamische Begegnungsplanung 12 eine vorrangig zeitlich ausgerichtete Transportstruktur auf im Gegensatz zu den herkömmlichen Verteilsystemen, die auf einer räumlichen Verteilstruktur beruhen.

Das Verfahren beinhaltet die dynamische Steuerbarkeit des gesamten Verteilprozesses. Dem Kunden wird es ermöglicht, den Fahrplan der schon im Transportsystem befindlichen Güter zeitlich und örtlich durch die Angabe eines neuen Zielortes beziehungsweise eines neuen Übergabeintervalls zu ändern. Dies wird möglich durch das Transportieren der Sachgüter und Dienstleistungen in einem dezentralen Netz mit Begegnungsverkehr.

Durch den intelligenten Einsatz des Güteraustausches zwischen den Lager- und Verteilerfahrzeugen, insbesondere durch Crossdocking, kann weiterhin erreicht werden, dass Leerfahrten größtenteils vermieden werden können. Dadurch werden Transportkapazitäten frei und die Kosten für Personal und Treibstoff verringert.

Unabhängig zu der rein Rechner gestützten Routenplanung ist ein Eingreifen eines Disponenten in die Entscheidung über die Akzeptanz einer neuen Route als alternative Weiterbildung der Erfindung möglich. Eine Akzeptanzentscheidung ist somit eine nicht technische Überprüfungsmöglichkeit eines mit technischen Mitteln erzeugten Vorschlages. Diese alternative Weiterbildung der Erfindung umsetzend beinhaltet das Verfahren dynamische Interaktionshilfen auf den beteiligten dezentralen Recheneinheiten, über welche die rechnergenerierten Routenvorschläge von den Disponenten akzeptiert werden können. Zur Absprache der Disponenten untereinander stehen bekannte unterschiedliche Kommunikationsmedien zur Verfügung.

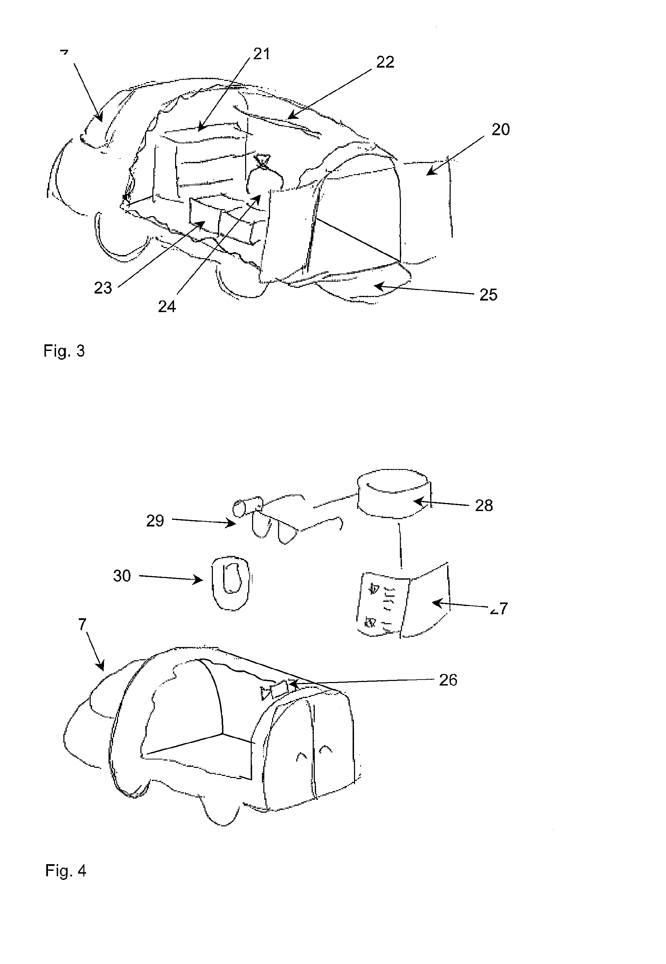

Figur 3 zeigt symbolisch die speziellen Vorrichtungen in den Fahrzeugen zum Austausch von Gütern, mit denen die Fahrzeuge für die dynamische Begegnungslogistik ausgerüstet sind. Zum physischen Austausch von Gütern zwischen jeweils zwei Fahrzeugen werden die Fahrzeuge heckseitig Tür an Tür positioniert, wobei spezielle Türen 20 zum Andocken das Manövrieren erleichtern. Um den Weg zwischen beiden Ladeflächen für schwerere Lasten zu überbrücken, sind unterschiedliche konstruktive Details, wie Rollbleche, Klappen 25 oder dergleichen vorgesehen.

Zur physischen Speicherung im rollenden Lager, das heißt im Fahrzeug, werden gemäß der dargestellten Ausführungsform Einheitsbehälter 23 und Regale 21 mit Label verwendet. Kleiderstangen 22, Kleiderhaken, Taschen 24 und dergleichen erleichtern die Ordnung im Fahrzeug. Die Platzverteilung in den Fahrzeugen erfolgt über ein Lagerverwaltungssystem, welches auf der dezentralen Rechentechnik gespeichert ist. Durch diese technische Unterstützung kann eine individuelle und optimale Ausnutzung des Laderaums der Fahrzeuge 7 erreicht werden.

Figur 4 zeigt spezielle Vorrichtungen in den Fahrzeugen als Teil der Sensorik zur Bemessung des Füllstandes und zur Unterstützung des Ein- und Auslagerns. Letzteres erfolgt mit Hilfe elektronischer Geräte, wie Scanner, Kamera 26 und insbesondere mit Datenbrille 29 zur Bilderfassung und Bilderkennung, einerseits um die Güter im Lagerverwaltungssystem zu registrieren und andererseits um den Lagerort im Fahrzeug 7 selbst zu dokumentieren. Dabei ist die Rechentechnik derart ausgestaltet, dass die einzelnen Komponenten, wie die Kamera 26, der Speicher 28 mit dem darin befindlichen Katalog 27, die Datenbrille 29 und das Rechnerhandy 30 drahtlos miteinander kommunizieren. Durch die Verwendung handelsüblicher elektronischer Hardware bleibt die Anschaffung des Gesamtsystems relativ kostengünstig und deren Benutzung wenig arbeitsaufwändig.

Die Sensorik der Fahrzeuge findet derart Verwendung, dass aktuelle Situationen erkannt und zur Steuerung der Verteilung gleichzeitig oder nachgelagert im Sinne einer sensorgesteuerten, dynamischen Datenhaltung verwendet werden können. Insbesondere sind dazu dem Fahrzeug Identifikationshilfen zugeordnet, beispielsweise in Form einer Datenbrille, die die Sendungen beim Ein- und Ausladen optisch erfasst und wiedererkennt. Die Identifikation der Sachgüter und Dienstleistungen bei der Einsortierung und der Auslagerung in oder aus dem rollenden Lager in Form der Fahrzeugflotte ist eine wichtige Voraussetzung für die Realisierung des Verfahrens. Insbesondere ermöglicht die spezielle Ausgestaltung der Erfindung durch den Einsatz einer Datenbrille das Erkennen und Wiedererkennen der einzelnen Güter.

Die Identifikation der Transportgüter kann alternativ auch durch Auslesen oder Einscannen des Adresslables vorgenommen werden.

Durch die Identifikation der Sachgüter mit der Datenbrille oder dem optischen Scan direkt während des Transportprozesses wird eine Sortierung der Güter untereinander unmittelbar während des Umschlages der Güter möglich. Die Sortierung besteht somit in der Benennung des zum Einsatz kommenden Abholfahrzeuges mittels dezentraler Rechentechnik und weiteren Übergaben an andere Fahrzeuge beziehungsweise der Benennung des Auslieferungsfahrzeuges der jeweiligen Güter.

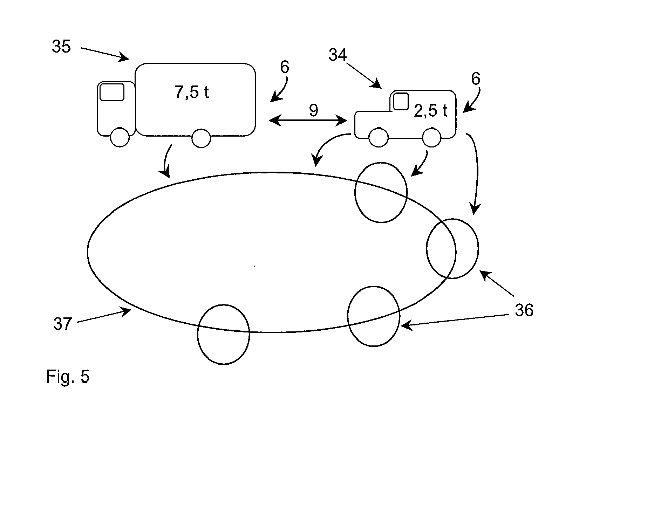

Figur 5 zeigt schematisch die Fahrzeuge 34, 35 unterschiedlicher Bauart, bei denen die Güteraufnahme 6 durch dezentrale Rechentechnik zeitlich, räumlich und gewichtsmäßig überwacht wird. Speziell sind die Fahrzeuge 34, 35 so ausgeprägt, dass sie die Aufgabe von rollenden Lagern auf einer regionalen Verteilertour 37 erfüllen und Güter möglichst kurzzeitig halten, um die Güter selbst für lokale Verteilertouren 36 auszuliefern oder an ein passendes Auslieferungsfahrzeug zu übergeben.

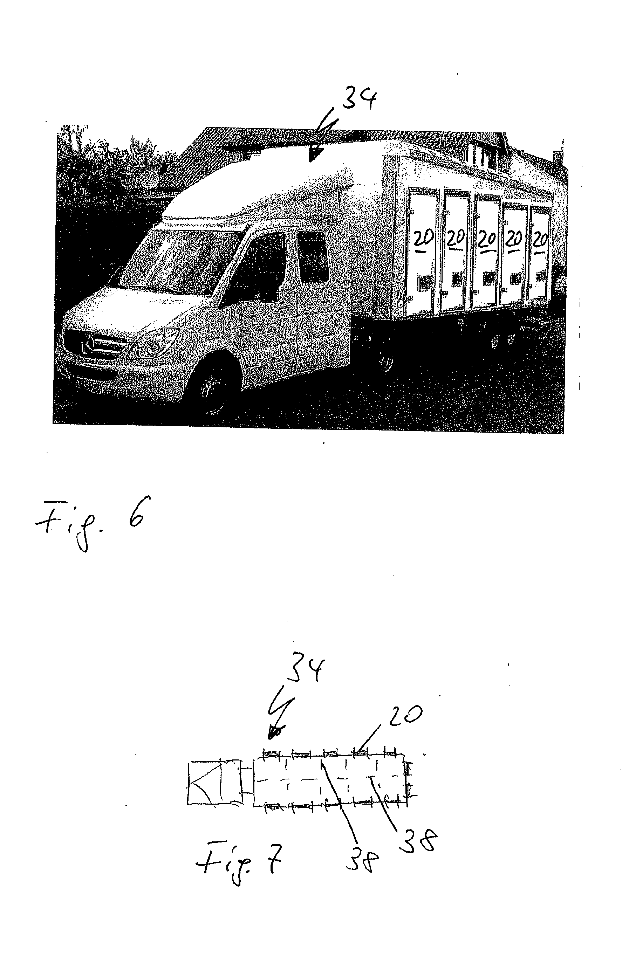

In Figur 6 und Figur 7 ist ein Lieferwagen 34 mit mehreren Türen 20 am Laderaum zum Andocken und der Aufnahme und Abgabe von Gütern dargestellt. Die Türen 20 sind zu beiden Seiten des Laderaumes angeordnet und darüber hinaus ist der Laderaum mittels Verschiebewände 38 segmentierbar ausgebildet.

Bei dem Lieferwagen 34 handelt es sich um einen Sattelauflieger auf Kleintransporterbasis, welcher an der Seite gleichmässig angeordnete Türen 20 hat. Die Türen 20 können darüber hinaus ausgeklappt werden und als Verladebleche dienen.

Damit können größere Mengen an einzelnen Ladestellen, beispielsweise im Depot eines herkömmlichen Paketdienstleisters, bereits vorsortiert aufgenommen werden.

Im Innenraum besteht die Möglichkeit durch Verschiebewände 38 oder Ähnliches, wie Abtrennungen in der Art von Raumteilern oder Regalen, kleinere Räume zu separieren. Jeder Raum beziehungsweise jede Tür 20 wird einem Zustellgebiet zugeordnet.

Somit entsteht ein mobiles Depot, welches auf einer festen Route die dynamischen Zustellgebiete tangentiell abfährt und an bestimmten Crossdockingpunkten die Sendungen an die entsprechenden Zustellfahrzeuge 7 übergeben kann.

Gleichzeitig wird dieses Fahrzeug 34 an diesen Punkten auch Ware aus den Zustellgebieten für andere Zustellgebiete aufnehmen und später wieder abgeben.

Die Flexibilität der Transportlogistik ermöglicht einerseits den Einsatz von Lieferwagen 34 als Lager- und Verteilfahrzeuge mit geringem bis mittlerem Gesamtgewicht, die sowohl für kleine lokale Verteilertouren 36 als auch für große regionale Verteilertouren 37 in Frage kommen. Andererseits wird die Alternative eröffnet, Lager- und Verteilfahrzeuge in der Bauart von LKWs 35 einzusetzen, welche bei hohem Güteraufkommen für regionale Verteilertouren 37 besser geeignet sind.

### LISTE DER BEZUGSZEICHEN

- 1: dezentrales Transportnetz
- 2: Route
- 3: Begegnung
- 4: Versender
- 5: Empfänger
- 6: Güteraufnahme
- 7: Lager- und Verteilfahrzeug, Zustellfahrzeug, Fahrzeug
- 8: Transport
- 9: Übergabe, Güteraustausch
- 10: Güterablieferung
- 11: Andockverfahren
- 12: dynamischer Begegnungsplan
- 13: dezentrale Recheneinheit
- 14: Zeitfenster
- 15: Planänderung, zusätzlicher Auftrag

- 20: Tür zum Andocken
- 21: Regal
- 22: Kleiderstange oder Stange für Hängeware
- 23: Einheitsbehälter
- 24: Tasche, Beutel
- 25: Rollblech, Klappe
- 26: Kamera
- 27: Katalog
- 28: Speicher
- 29: Datenbrille
- 30: Rechnerhandy

- 34: Lieferwagen, Fahrzeug
- 35: Lastkraftwagen
- 36: lokale Verteilertour
- 37: regionale Verteilertour
- 38: Verschiebewände

## Patentansprüche

1. Verfahren zur Abholung und Auslieferung von Sachgütern oder der Erbringung von Dienstleistungen mittels dynamischer Routenplanung, bei dem
- mehrere Fahrzeuge mit Lagerkapazität auf berechneten Routen in einem dezentralen Transportnetz Sachgüter oder Dienstleistungen ausliefern, wobei
- die Routen dezentral für die Fahrzeuge berechnet werden und dass
- neue geänderte Routen mit Übergabepunkten und Übergabezeiten für Sachgüter oder Dienstleistungen zwischen Fahrzeugen dezentral berechnet und abgefahren werden, wenn während des Abfahrens der Routen
• neue Aufträge angenommen und/oder
• ein Austausch oder eine Übergabe von Sachgütern oder Dienstleistungen zwischen Fahrzeugen stattfindet und/oder
• eine Änderung von bestehenden Aufträgen erfolgt.

2. Verfahren nach Anspruch 1, **dadurch gekennzeichnet, dass** die Routen dezentral mobil in den Fahrzeugen berechnet werden.

3. Verfahren nach Anspruch 1, **dadurch gekennzeichnet, dass** die Routen dezentral stationär innerhalb des dezentralen Transportnetzes berechnet werden.

4. Verfahren nach Anspruch 1, **dadurch gekennzeichnet, dass** Tourdaten dezentral stationär innerhalb des dezentralen Transportnetzes berechnet und an das Fahrzeug übermittelt werden und dass die Routen zwischen den Tourdaten mobil in den Fahrzeugen berechnet werden.

5. Verfahren nach einem der Ansprüche 1 bis 4, **dadurch gekennzeichnet, dass** die Berechnung einer neuen Route durch eine Konsolidierung von Sachgütern und Dienstleistungen ausgelöst wird.

6. Verfahren nach einem der Ansprüche 1 bis 5, **dadurch gekennzeichnet, dass** die Berechnung einer neuen Route durch eine zeitliche und örtliche Überwachung der Füllstände, des Volumens und des Gewichts der Ladung der Fahrzeuge ausgelöst wird.

7. Verfahren nach einem der Ansprüche 1 bis 6, **dadurch gekennzeichnet, dass** die Berechnung einer neuen Route durch eine Veränderung der Verkehrssituation ausgelöst wird.

8. Fahrzeug (34) zur Durchführung eines Verfahrens nach den vorgenannten Ansprüchen, **dadurch gekennzeichnet, dass** eine Recheneinheit zur Berechnung einer Route im Fahrzeug vorgesehen ist.

9. Fahrzeug (34) nach Anspruch 8, **dadurch gekennzeichnet, dass** eine Austauschvorrichtung für Sachgüter am Fahrzeug (34) vorgesehen ist.

10. Fahrzeug (34) nach Anspruch 8 oder 9, **dadurch gekennzeichnet, dass** zur Warenerfassung in den Fahrzeugen (34) eine Datenbrille (29), ein Scanner, ein Fotoapparat oder eine Filmkamera vorgesehen ist.

11. Fahrzeug (34) nach einem der Ansprüche 8 bis 10, **dadurch gekennzeichnet, dass** ein Ortungs- und Navigationssystem im Fahrzeug (34) angeordnet ist.

12. Fahrzeug (34) nach einem der Ansprüche 8 bis 11, **dadurch gekennzeichnet, dass** als Recheneinheit und/oder als Ortungs- und Navigationssystem ein Smartphone im Fahrzeug (34) angeordnet ist.

13. Fahrzeug (34) nach einem der Ansprüche 8 bis 12, **dadurch gekennzeichnet, dass** ein Wechselwerbeträger am Fahrzeug angeordnet ist.

14. Fahrzeug nach einem der Ansprüche 8 bis 13, **dadurch gekennzeichnet, dass** das Fahrzeug (34) mehrere Türen (20) an den Seitenflächen des Laderaumes aufweist, wobei der Laderaum durch Verschiebewände (38) segmentierbar ausgebildet ist.
